# FASCICULE DE BREVET EUROPEEN

(11) **EP 2 912 758 B1**
(45) Date de publication et mention de la délivrance du brevet: **12.05.2021**
(21) Numéro de dépôt: 13785550.8
(22) Date de dépôt: 14.10.2013
(51) Int. Cl.: H02K 7/18, B64C 11/44, H01F 38/18, H02K 11/00

(54) **SYSTEME ELECTROMECANIQUE D'ACTIONNEMENT ET/OU GENERATION, COMPRENANT UNE ISOLATION ELECTRIQUE ENTRE LA SOURCE ELECTRIQUE ET LE CONSOMMATEUR**
ELEKTROMECHANISCHES BETÄTIGUNGS- UND/ODER STROMERZEUGUNGSSYSTEM MIT EINER ELEKTRISCHEN ISOLIERUNG ZWISCHEN STROMQUELLE UND LAST
ELECTROMECHANICAL ACTUATION AND/OR GENERATION SYSTEM INCLUDING AN ELECTRICAL INSULATION BETWEEN THE ELECTRICAL SOURCE AND THE LOAD

(30) Priorité: 24.10.2012 FR 1260139
(43) Date de publication de la demande: 02.09.2015
(73) Titulaire: Safran Electrical & Power, 31702 Blagnac Cedex (FR)
(72) Inventeur: DUVAL, Cédric, F-77920 Samois Sur Seine (FR)
(74) Mandataire: Cabinet Beau de Loménie
(86) Numéro de dépôt international: PCT/FR2013/052440
(87) Numéro de publication internationale: WO 2014/064363

(56) Documents cités:
- WO-A1-2011/135236
- FR-A1- 2 961 176
- GB-A- 2 461 786
- US-A- 4 591 313

## Description

### Domaine technique et art antérieur

L'invention s'inscrit dans le domaine des machines électriques tournantes à courant alternatif. Ces machines comprennent notamment les moteurs asynchrones ou machines à induction, ainsi que les moteurs ou générateurs synchrones. Ces machines électriques fournissent ou sont alimentées par une tension monophasée ou triphasée, ou, plus rarement, biphasée. En fonctionnement moteur ou générateur, ils ont des points de fonctionnement caractérisés par un couple et une vitesse de rotation qui sont atteints par l'application d'une énergie électrique.

Depuis l'avènement de l'électronique de puissance, on dispose de convertisseurs de contrôle qui permettent le contrôle de la machine électrique sur l'ensemble de sa plage d'utilisation couple/vitesse.

Quand le moteur et/ou générateur, et le convertisseur de contrôle sont en déplacement l'un par rapport à l'autre, il est connu de mettre en place des contacts mobiles, typiquement tournants, comme des ensembles bagues et collecteurs. C'est par exemple le cas dans un réacteur, comme un turboréacteur à soufflante non carénée (voir WO2011/135236, GB2461786 et US4591313) dont l'orientation des pales doit être contrôlée dynamiquement : le moteur électrique d'actionnement des pales est en rotation autour de l'axe du réacteur et est commandé par un convertisseur de contrôle externe qui permet au niveau de la machine électrique de freiner par conversion d'énergie mécanique en énergie électrique et d'actionner par conversion d'énergie électrique en énergie mécanique. La connexion est assurée par un ensemble bague et collecteurs.

Dans de tels cas d'une machine électrique en rotation par rapport au convertisseur de contrôle, on rencontre des difficultés en matière de refroidissement des contacts et de la nécessaire maintenance de ceux-ci. Au final, les contacts tournants ont une durée de vie limitée, à tel point que l'actionnement électrique n'a pas supplanté dans les systèmes tournants l'actionnement hydraulique, basé sur des joints tournants, présentant quant à eux d'autres faiblesses, notamment les risques de fuites. Parfois même, on installe le convertisseur de contrôle dans le domaine mobile, pour éviter d'avoir à transmettre la commande de puissance entre le domaine fixe et le domaine mobile, mais cela crée d'autres difficultés, telles que la détérioration accélérée de l'électronique en conditions contraignantes, incluant les vibrations, la force centrifuge et les possibles températures élevées ainsi que des difficultés portant sur le transfert des signaux de commandes.

### Résumé de l'invention

Pour résoudre ces problèmes, il est proposé un dispositif tel que défini dans la revendication 1. Le transformateur isole ainsi électriquement la machine électrique d'une source ou d'une charge électrique alternative suivant son mode de fonctionnement moteur ou générateur. Le transformateur autorise une mise en forme supplémentaire de l'énergie électrique grâce à son rapport de transformation en courant ou en tension et peut permettre ainsi la simplification du convertisseur de puissance ou l'adaptabilité de celui-ci au moteur et vice-versa.

L'invention peut être mise en œuvre dans un réseau électrique embarqué, par exemple un réseau électrique avion. Ainsi, on peut alimenter le démarreur électrique de la turbine APU (Auxiliary Power Unit), pour son démarrage, à travers un transformateur selon les principes décrits dans le présent document. On peut aussi alimenter le démarreur électrique de la turbine principale d'un turboréacteur, pour son démarrage, selon les principes évoqués.

Grâce à l'invention, la machine électrique est isolée galvaniquement de sa source ou de sa charge électrique par couplage magnétique.

La machine électrique peut être une machine asynchrone ou une machine synchrone incluant des barres ou un circuit d'amortissement, auquel cas, malgré les contraintes qu'il y a à asservir un couple à vitesse nulle, il est possible de le faire au travers d'un transformateur.

Avantageusement, le transformateur peut être un transformateur ayant un rapport de transformation particulier permettant l'optimisation du convertisseur de contrôle et /ou du moteur.

Le transformateur est un transformateur tournant, remplaçant les contacts mobiles comme les ensembles bagues et collecteurs ou les systèmes tournants d'actionnement hydraulique, basés sur des joints tournants.

Il permet de ne pas placer de convertisseur de contrôle en zone tournante, qui peut aussi être en zone de haute température, tout en évitant la nécessité d'assurer un refroidissement spécifique, et en permettant que l'actionnement du système cible soit effectué en rotation ou à l'arrêt. Le transformateur et le moteur électrique peuvent être à distance l'un de l'autre.

Le dispositif comprend une unité de contrôle configurée pour asservir en commande vectorielle et/ou scalaire. Ainsi, il est aussi possible d'utiliser une grande variation de commandes pour contrôler le moteur, sans saturer le transformateur si l'on respecte certains critères sur la commande et entre autres la minimisation du rapport tension sur fréquence V/f.

Dans un mode de réalisation, le dispositif comprend au moins une deuxième machine électrique à courant alternatif, disposant d'une connexion électrique pour son alimentation électrique par une source par application aux bornes du stator d'une tension, la connexion du deuxième moteur comprenant le transformateur, le dispositif comprenant de plus deux liaisons mécaniques pour l'actionnement de deux systèmes cibles différents par respectivement chacun des deux moteurs.

Et dans encore un autre mode de réalisation, le dispositif comprend au moins une deuxième machine électrique à courant alternatif, disposant d'une connexion électrique pour son alimentation électrique par une source par application aux bornes du stator d'une tension, la connexion du deuxième moteur comprenant le transformateur, le dispositif comprenant également deux liaisons mécaniques pour l'actionnement par respectivement chacun des deux moteurs et une cinématique de synchronisation pour synchroniser les deux liaisons mécaniques.

Toujours dans un autre mode de réalisation, le dispositif d'actionnement ou génération comprend de plus un deuxième transformateur pour le transfert d'une énergie électrique aux bornes du rotor. Cela permet de varier l'alimentation de la machine, selon par exemple qu'elle est en cours de démarrage ou qu'elle tourne en régime continu.

Il est aussi possible que le dispositif comprenne un boîtier de configuration pour modifier un rapport de tension ou de courant entre le primaire et le secondaire du transformateur.

L'invention peut s'appliquer à un moteur de propulsion comportant des pales orientables, comprenant un dispositif d'actionnement tel qu'évoqué, le dispositif d'actionnement étant agencé pour actionner au moins une pale du moteur, et dans lequel le transformateur est un transformateur tournant transférant une puissance électrique d'une zone non tournante de la machine électrique en fonctionnement moteur à une zone tournante. En fonctionnement génératrice de la machine électrique, le transformateur tournant permet soit de transférer une puissance électrique d'une zone tournante vers une zone non tournante ou de contrôler la dissipation de l'énergie électrique en énergie thermique au niveau de la machine électrique. Le moteur peut être un turboréacteur à soufflante non carénée.

### Brève description des figures

L'invention va maintenant être décrite en relation avec les figures annexées, fournies à titre d'illustration.
La figure 1 présente un moteur alimenté et commandé selon l'art antérieur.
La figure 2 présente un exemple de commande vectorielle appliqué au moteur de la figure 1, conforme à l'art antérieur.
La figure 3 présente l'effet de la commande vectorielle de la figure 2 sur le rotor du moteur de la figure 1.
La figure 4 présente un moteur alimenté et commandé selon l'invention.
La figure 5 présente un exemple de réalisation de l'invention.
La figure 6 présente un exemple de commande vectorielle appliqué au moteur de la figure 4, conforme à l'invention.
La figure 7 présente l'effet de la commande vectorielle de la figure 6 sur le rotor du moteur de la figure 4 ou de la figure 5.
La figure 8 présente une variante de réalisation de l'invention.
La figure 9 présente une autre variante de réalisation de l'invention.
Les figures 10 et 11 présentent deux autres exemples de réalisation de l'invention.

### Exposé détaillé de l'invention

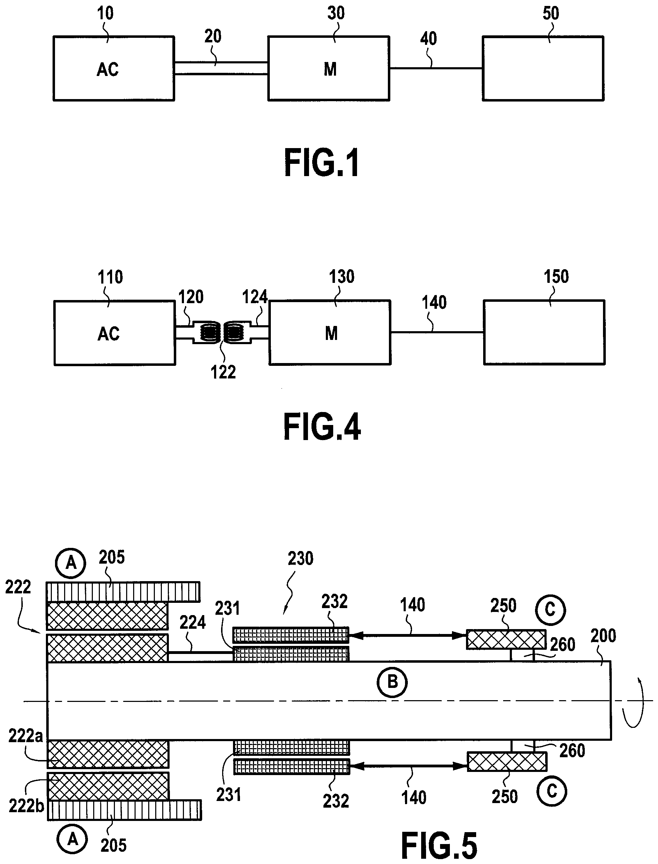

En **figure 1****,** on a représenté un dispositif d'actionnement, et plus généralement de conversion d'énergie selon l'art antérieur, comprenant un moteur à courant alternatif 30 disposant d'une connexion électrique 20 pour l'application aux bornes de son stator d'une puissance électrique alternative fournie par une source 10. La connexion électrique 20 comprend au moins deux câbles conducteurs, dont le nombre est fonction du type de puissance alternative utilisée, qui peut être monophasée, triphasée ou hexaphasée notamment. Dans le cas d'une alimentation en triphasée, le stator peut être relié à la connexion électrique en étoile ou en triangle. Le moteur dispose d'une liaison mécanique 40, reliée à son rotor, pour l'actionnement d'un système cible 50.

La source 10 comprend généralement un convertisseur de contrôle, dont le dernier élément avant la connexion électrique 20 permet le contrôle d'une tension ou d'un courant à une fréquence définie par une électronique de commande

La connexion électrique 20, outre les câbles conducteurs, peut comprendre un ensemble de collecteurs tournants de type balais couplés à des anneaux de friction ou bagues.

Le moteur 30 peut être un moteur asynchrone, synchrone, à courant continu ou piezo-électrique. Dans le cas d'une machine asynchrone, le moteur peut être commandé avec une commande scalaire, à rapport V/f (tension sur fréquence) constant, ou quand la fréquence est faible, à rapport E/f (force électromotrice sur fréquence) constant.

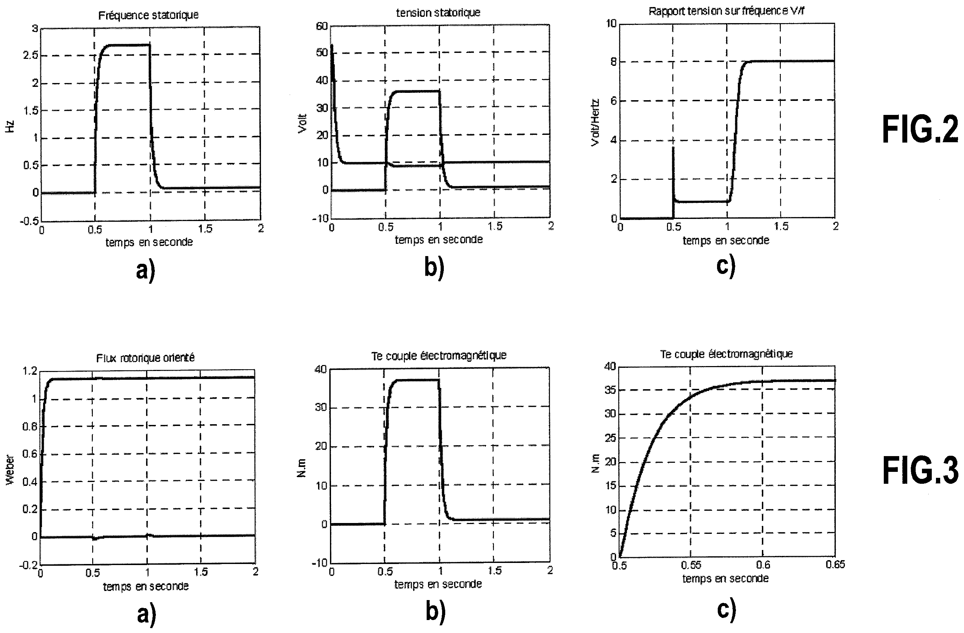

Dans le cas d'une machine asynchrone, un exemple de commande vectorielle appliquée selon l'art antérieur par la source 10 au moteur 30, rotor bloqué, est représentée en **figure 2****.** Le graphique 2a présente la fréquence de la tension appliquée, le graphique 2b présente les composantes de la tension appliquée, et le graphique 2c présente le rapport de ces deux valeurs. La séquence présentée a trois phases successives : tout d'abord une phase de fluxage à tension continue, débutant, pour une composante de la tension, à 50 V et se stabilisant à 10 V (l'autre composante est nulle), puis une phase de tension plus élevée, avec un composante à 35 V, et alternative à 2.7 Hz, pour un rapport V/f proche de 1 (à un facteur multiplicatif prés), puis enfin une phase à tensions et fréquences plus faibles, avec un rapport V/f de 8.

La **figure 3** montre les effets de cette commande sur le rotor. Le graphique 3a représente les composantes du flux subi par le rotor, et le graphique 3b représente le couple qui nait au rotor. Le graphique 3c constitue un agrandissement d'une partie de graphique b.

Le rotor du moteur 30 subit, lors de l'application de la phase de fluxage, un flux orienté dont l'intensité, partant de 0 Wb s'établit rapidement à 1.1 Wb (sur une composante, l'autre étant nulle). Puis le flux reste constant jusqu'à la fin de la troisième phase. Le couple est quant à lui nul pendant la première phase, élevé à 37 Nm pendant la deuxième phase, et faible à 1 ou 2 Nm pendant la troisième phase. Le graphique 3c montre l'établissement du couple en 0.1 seconde au début de la deuxième phase.

On voit en figure 2c la difficulté qu'il y a à créer un couple faible en gardant une valeur de V/f d'un ordre de grandeur constant.

La **figure 4** montre un dispositif d'actionnement, ou plus généralement de conversion d'énergie, selon l'invention. Il comprend des éléments analogues à ceux représentés en figure 1, avec des références incrémentées de 100. Ainsi, le dispositif comprend un moteur à courant alternatif 130 disposant d'une connexion électrique pour l'application aux bornes de son stator d'une puissance électrique alternative fournie par une source 110. La connexion électrique comprend une section 120 composée d'au moins deux câbles conducteurs, dont le nombre est fonction du type de puissance alternative utilisée, et une section 124, également composée d'un nombre de câbles conducteurs parallèles fonction du type de machine électrique utilisée. Les deux sections sont reliées par un transformateur d'isolement 122, la section 120 étant connectée au primaire du transformateur 122 et la section 124 étant reliée au secondaire du transformateur 122. Le primaire et le secondaire du transformateur 122 sont isolés électriquement l'un de l'autre. Dans le cas d'une alimentation en triphasée, le stator peut être relié à la section 124 en étoile ou en triangle. Le moteur dispose d'une connexion mécanique 140, reliée à son rotor, pour l'actionnement d'un système cible 150.

Comme précédemment, la source 110 comprend généralement, mais pas toujours, un convertisseur de contrôle, dont le dernier élément avant la connexion électrique est un convertisseur produisant une tension alternative à une fréquence définie par une électronique de commande. Les câbles conducteurs de la connexion électrique sont reliés à des noeuds de sortie du convertisseur entre des diodes, des transistors et des filtres passifs, dont l'actionnement crée la tension alternative.

Les sections 120 et 124, outre les câbles conducteurs, peuvent comprendre un ensemble de collecteurs tournants de type balais couplés à des anneaux de friction ou bagues pour l'acquisition de signaux de mesures. De manière importante, il n'y a pas d'électronique de puissance entre le transformateur 122 et le moteur 130, c'est-à-dire dans la section 124. La forme de la tension et sa fréquence restent inchangées tout le long de cette section contrairement à son amplitude qui peut varier (rapport de transformation du transformateur, chute de tension...).

La **figure 5** présente un mode de réalisation de l'invention, s'adaptant par exemple à une structure de turboréacteur à soufflante non carénée. Le moteur 230 comprend un stator 231 et un rotor 232, qui actionne, par une ou plusieurs liaisons cinématiques 140 comprenant éventuellement un ou plusieurs réducteurs, un système cible 250 unique, ici un système d'orientation dynamique des pales du réacteur. Le stator 231 est fixé dans un repère B tournant par rapport au corps de l'avion ou à la nacelle 205 du moteur, qui constituent un repère A fixe, par exemple en étant relié à un axe tournant 200 du réacteur. Le système cible 250, constituant un repère C, est mobile en rotation par rapport au repère B (ou l'axe tournant) par une cinématique 260 de rotation.

Le moteur 230, qui peut être une machine asynchrone, est alimenté en puissance alternative par des câbles électriques parallèles 224, reliés directement au secondaire 222a d'un transformateur tournant 222, dont le primaire 222b est fixe dans le repère A, par exemple en étant monté immobile sur la nacelle 205 du moteur.

Dans les modes de réalisation des figures 4 et 5, le transformateur 122 ou 222 peut avoir, dans une variante constituant un perfectionnement, une couronne extérieure dont l'épaisseur, surdimensionnée par rapport à ses bras, permet d'éviter la saturation du matériau ferromagnétique en cas d'application d'une commande à vitesse faible ou nulle. En effet, par conception usuelle, la surface d'entrefer des transformateurs tournants est souvent augmentée d'emblée, afin de limiter le courant magnétisant.

Cela est notamment, mais pas seulement, mis en œuvre pour commander un moteur 130 ou 230 qui est une machine asynchrone.

Ainsi, grâce à une augmentation de la masse du transformateur 122 ou 222 de l'ordre de seulement 10%, causée par un tel surdimensionnement de la couronne, le transformateur peut accepter, sans que son noyau soit saturé lors de l'application d'une commande à faible vitesse, un rapport V/f trois fois supérieur à celui qui est nécessaire pour commander le moteur à fréquence élevée. Il n'est pas nécessaire d'augmenter la masse des bras du transformateur.

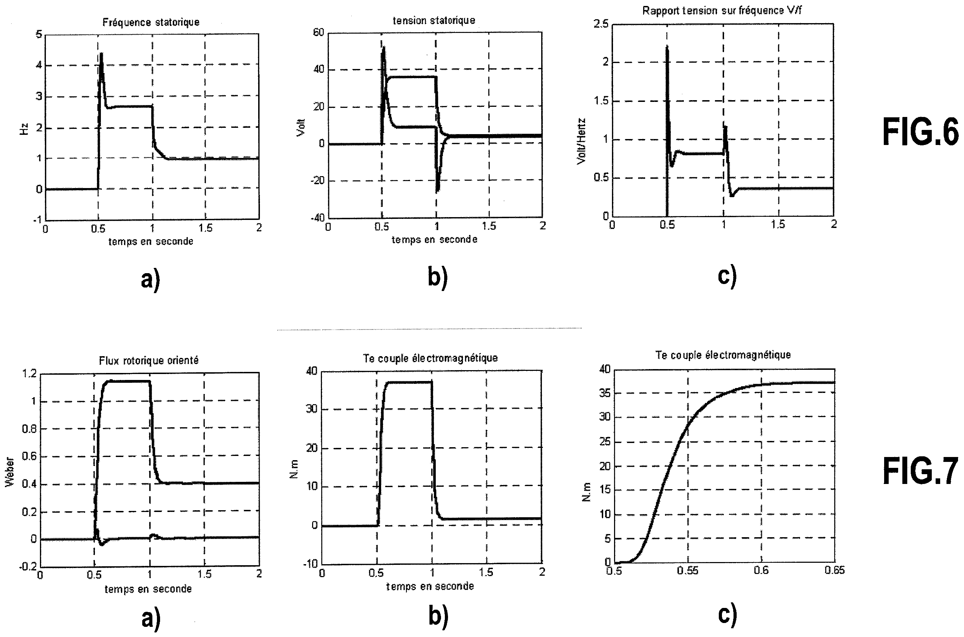

En **figure 6****,** on présente une commande vectorielle appliquée à un moteur asynchrone alimenté comme montré en figures 4 et 5, et basée sur une stratégie de contrôle compatible avec ce montage, par laquelle le flux est en partie asservi en fonction de la consigne de couple.

Le graphique 6a présente la fréquence de la tension appliquée, le graphique 6b présente les composantes de la tension appliquée, et le graphique 6c présente de rapport de ces deux valeurs. La séquence présentée a trois phases successives : tout d'abord une phase de tension nulle puis une phase de tension, avec une composante montant rapidement à 35 V et une composante naissant à une valeur élevée et se stabilisant rapidement à 10 V, alternative à environ 2.7 Hz, pour un rapport V/f proche de 0.7 (à un facteur multiplicatif prés), puis enfin une phase à tensions et fréquences plus faibles, avec un rapport V/f proche de 0.4.

La **figure 7** montre les effets de cette commande sur le rotor. Le graphique 7a représente les composantes du flux subi par le rotor, et le graphique 7b représente le couple qui nait au rotor. Le graphique 7c constitue un agrandissement d'une partie de graphique 7b.

Le rotor du moteur 130 subit, lors de l'application de cette commande, un flux nul pendant la première phase, puis augmentant rapidement à plus de 1 Wb (sur une composante, l'autre étant nulle) pendant la deuxième phase, et diminuant rapidement à 0.4 Wb pour ensuite rester constant jusqu'à la fin de la troisième phase (l'autre composante restant nulle). Le couple est quant à lui nul pendant la première phase, élevé à environ 37 Nm pendant la deuxième phase, et faible à 1 ou 2 Nm pendant la troisième phase. Le graphique 7c montre l'établissement du couple en 0.1 seconde au début de la deuxième phase, à peine plus lent que dans la phase correspondante de la commande représentée en figure 3.

La figure 6b montre la possibilité qu'il y a, avec la stratégie proposée, de commander un couple faible tout en conservant un rapport V/f d'un ordre de grandeur inférieur ou égal au rapport V/f correspondant au fonctionnement nominal de la machine électrique.

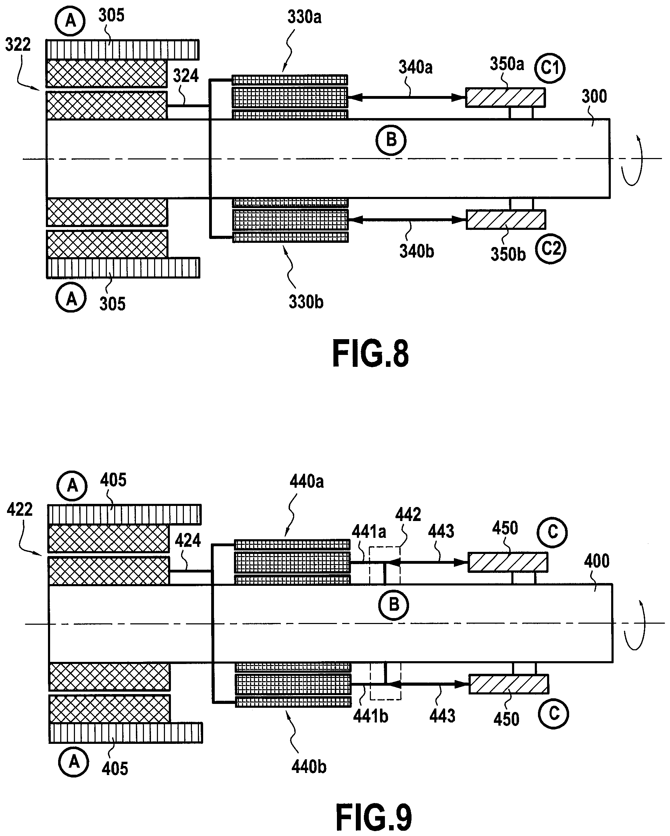

La **figure 8** montre un deuxième mode de réalisation, comprenant deux moteurs asynchrones 330a et 330b, deux systèmes cibles 350a et 350b et un transformateur 322, par exemple tournant. Dans ce mode de réalisation, les deux moteurs sont alimentés directement par une même tension et une même fréquence, et on s'est assuré préalablement que les couples résistants imposés par les systèmes cibles sont toujours inférieurs, pendant le régime transitoire précédant l'établissement du régime permanent aux couples maximums possibles, au vu des caractéristiques des moteurs correspondants. Des liaisons cinématiques 340a et 340b sont présentes entre les rotors des moteurs et les systèmes cibles correspondants. Des câbles électriques avec dérivation alimentent à la fois le stator du moteur 330a et le stator du moteur 330b, mais aucune électronique de puissance n'est présente entre le transformateur 322 et le stator du moteur 330a, ni entre le transformateur 322 et le stator du moteur 330b.

La **figure 9** présente une variante du mode de réalisation de la figure 8, dans lequel les éléments correspondants sont référencés par ajout de 100, et dans laquelle les deux moteurs 440a et 440b n'actionnent qu'un unique système cible ou plusieurs systèmes cibles synchronisés 450. Une cinématique de synchronisation 442 est présente entre d'une part des liaisons cinématiques 441a et 441b en sortie, chacune du rotor d'un des moteurs, et d'autre part, une liaison cinématique synchronisée 443 actionnant le système cible 450. La cinématique de synchronisation peut être placée à la sortie du moteur, au niveau d'un réducteur, ou au niveau du système cible.

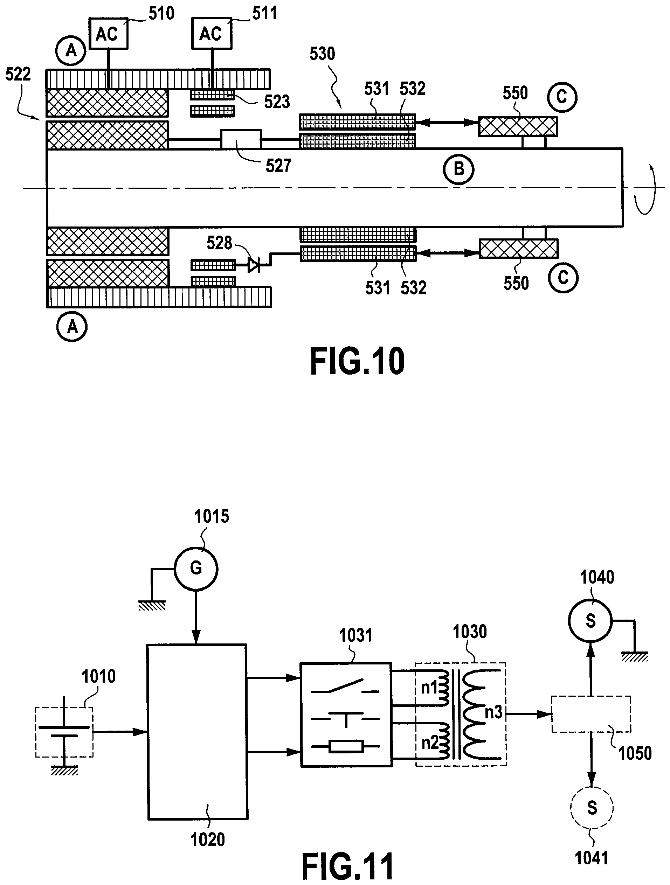

La **figure 10** présente un mode de réalisation de l'invention impliquant une machine électrique synchrone 530 fonctionnant en mode moteur ou générateur et dont l'inducteur 531 dispose de barres qui ont été dimensionnées ou d'un bobinage d'amortissement qui a été dimensionné pour un démarrage asynchrone (encore appelé démarrage par induction). Cela permet l'obtention d'un couple au niveau du système cible 550, relié à l'inducteur, même si le moteur synchrone 530 n'est pas en rotation.

La machine synchrone 530 est disposée avec son induit 532 en repère B et son inducteur 531 en repère C. Il peut y avoir une liaison cinématique et/ou un réducteur entre le système cible 550 et l'inducteur 531.

La commande de démarrage est transmise à l'induit 532 de la machine 530 par une source AC 510 à travers le transformateur tournant 522. Celui-ci constitue une interface entre les repères A et B, la source 510 se trouvant dans le repère A.

Une fois la machine électrique 530 et le système cible 550 en rotation, un deuxième transformateur tournant 523, alimenté par une source AC 511, sert pour alimenter l'inducteur 531 en courant continu (via un redresseur tournant passif 528 présent sur la connexion entre le transformateur 523 et l'inducteur 531) et permet alors un passage dans un mode de fonctionnement synchrone de celle-ci.

Le transformateur tournant 522 pour l'alimentation de l'induit 532 est alimenté par la source AC 510, et est de puissance supérieure au transformateur tournant 523 pour l'alimentation de l'inducteur 531, qui est quant à lui alimenté par la source AC 511.

Si nécessaire, il est possible de rajouter un commutateur 527 (contacteur, relais, disjoncteur, sectionneur...) ne possédant aucune fonction d'asservissement du moteur, entre le transformateur 522 et l'induit 532. L'asservissement se fait uniquement dans le repère A des sources électriques comme précédemment.

Cette réalisation avec un deuxième transformateur pour l'inducteur s'applique aussi aux autres modes de réalisation décrits précédemment.

Dans tous les modes de réalisation qui ont été présentés, l'architecture est réversible en puissance c'est-à-dire que l'on peut récupérer dans le repère A de l'énergie électrique produite dans le repère B. Ce mode de fonctionnement de type générateur et non plus moteur permet en outre de freiner le système cible (250, ou respectivement 350a, 350b, 450 ou 550).

Une autre façon d'obtenir cette fonction de frein dans une certaine mesure peut être de dissiper l'énergie mécanique en énergie thermique au niveau du rotor de la machine électrique si elle est de type asynchrone ou dans les barres d'amortissement dans le cas de la machine synchrone à barres d'amortissement.

En **figure 11****,** on a représenté un exemple d'utilisation du principe d'asservissement selon l'invention dans un réseau électrique embarqué.

Une première possibilité est d'utiliser une source de tension DC 1010 qui au travers d'un convertisseur de puissance DC/AC 1020 vient alimenter le primaire d'un transformateur 1030 produisant au secondaire une tension alternative permettant d'asservir une machine électrique à démarrage asynchrone 1040.

De façon réversible, la machine électrique 1040 peut devenir génératrice et alimenter ainsi la source de tension continue 1010.

L'avantage de cette configuration est de pouvoir utiliser le transformateur 1030 pour modifier le rapport de tension (n3/n1) ou le rapport de courant (n1/n3), à l'aide d'un boîtier de configuration 1031 et éviter ainsi l'utilisation d'un convertisseur DC/AC de type Boost ou Buck dont les éléments passifs peuvent être lourds, encombrants et peu fiables.

De plus, si la machine électrique 1040 est de type Alternateur-Démarreur (Starter Generator), pour assurer son fonctionnement en génératrice du réseau électrique, son neutre est classiquement relié à la masse du réseau électrique embarqué afin de sécuriser celui-ci.

Lors du démarrage, une utilisation directe aux bornes de la machine électrique d'un convertisseur de démarrage impose de ségréguer le neutre de la source DC ou le neutre de la machine électrique de la masse du réseau électrique. En effet, sans isolement galvanique un courant de circulation apparaît alors entre les deux neutres au travers de la masse du réseau électrique.

Or avec l'invention, l'isolation galvanique est fournie par le transformateur 1030.

Un mode de réalisation complémentaire peut être l'utilisation d'une génératrice en source AC 1015. Un convertisseur de puissance AC/AC est alors utilisé à la place du convertisseur DC/AC 1020. Pour des raisons d'optimisation le convertisseur AC/AC peut être composé d'un convertisseur AC/DC (ex : redresseur passif) simple et du convertisseur DC/AC précédent (ex : onduleur triphasé, pont en H ou demi-pont) dimensionné correctement pour assurer la compatibilité.

Si le premier rapport de transformation du transformateur n'est pas adapté, il est possible d'utiliser un autre circuit primaire sur le même circuit magnétique du transformateur ou même d'associer en série un deuxième circuit de façon à obtenir le bon rapport de transformation n3/n2 ou n3/(n2+n1). De même que précédemment, l'isolation galvanique permet de ne pas ségréguer le neutre de la masse.

Le boitier de configuration 1050 permet de passer entre différentes machines électriques 1040 et 1041 ou tout simplement de ségréguer la machine électrique 1040 pour qu'elle puisse fonctionner en génératrice et alimenter le réseau électrique.

On obtient les avantages suivants avec cette famille de montages impliquant un transformateur fixe : la machine électrique est isolée galvaniquement de la source de tension, et on dispose de la possibilité de modifier le rapport de transformation pouvant servir à adapter la tension.

Ainsi on a décrit plusieurs modes de réalisation permettant, soit l'asservissement et la régulation d'un ou plusieurs moteurs à travers un transformateur, soit l'actionnement sans contrôle d'un ou plusieurs moteurs à travers un transformateur. Il n'y a pas d'actionneur actif entre le transformateur et le moteur. Il ne peut pas y avoir d'électronique de puissance ou d'électronique de contrôle en zone tournante. On précise que le type de transformateur (monophasé, triphasé...) peut être fonction du type de moteur utilisé (monophasé, triphasé...) ainsi que de l'éventuelle présence d'un dispositif de démarrage du moteur. Comme évoqué plus haut, la machine électrique peut fonctionner, en fonction des circonstances, en mode génératrice. Il peut y avoir plusieurs transformateurs en série pour que l'énergie transite entre la source et le consommateur. Il peut de plus y avoir plusieurs machines électriques tournantes (deux ou plus) alimentées ou alimentant un consommateur à travers le transformateur ou les transformateurs.

L'invention n'est pas limitée aux modes de réalisation décrits, mais s'étend à toutes les variantes entrant dans le cadre des revendications.

## Revendications

1. Dispositif d'actionnement ou génération, comprenant une machine électrique tournante à courant alternatif (130 ; 230 ; 330a, 330b ; 440a, 440b) disposant d'une connexion électrique (122, 124 ; 222, 224 ; 322, 324 ; 422, 424) pour l'application aux bornes du stator de la machine d'une tension alternative créée en sortie d'un convertisseur de contrôle (110), dont le dernier élément avant la connexion électrique est un convertisseur produisant une tension alternative à une fréquence définie par une électronique de commande, la connexion comprenant un transformateur tournant (122 ; 222 ; 322 ; 422 ; 522), **caractérisé en ce que** le convertisseur de contrôle (110) fixe est configuré pour asservir la machine en commande vectorielle et/ou scalaire à travers le transformateur tournant sans recourir à un actionneur actif entre ce transformateur tournant et la machine.

2. Dispositif selon la revendication 1, dans lequel la machine (130 ; 230 ; 330a, 330b ; 440a, 440b) est une machine asynchrone.

3. Dispositif selon la revendication 1, dans lequel la machine (530) est une machine synchrone comportant un induit (532) et dont un inducteur (531) inclut des barres ou un circuit d'amortissement dimensionné pour un démarrage asynchrone.

4. Dispositif selon la revendication 3, comprenant de plus un deuxième transformateur tournant (523) pour alimenter l'inducteur en courant continu au travers d'un redresseur tournant passif (528).

5. Dispositif selon la revendication 4, dans lequel le transformateur tournant (522) alimentant l'induit (532) est alimenté par une source à courant alternatif (510) et le deuxième transformateur tournant (523) alimentant l'inducteur (531) en courant continu est alimenté par une deuxième source à courant alternatif (511).

6. Dispositif selon la revendication 1 ou la 2, comprenant de plus au moins une deuxième machine électrique tournante à courant alternatif (330a, 330b), disposant d'une connexion électrique (322, 324) pour l'application à des bornes du stator de la deuxième machine d'une tension alternative, la connexion de la deuxième machine comprenant le transformateur tournant (322), le dispositif comprenant de plus deux liaisons cinématiques (340a, 340b) présentes entre des rotors des machines et les systèmes cibles correspondants pour l'actionnement de deux systèmes cibles différents (350a, 350b) par les rotors de respectivement chacune des deux machines.

7. Dispositif selon la revendication 1 ou la 2, comprenant de plus au moins une deuxième machine électrique tournante à courant alternatif (440a, 440b), disposant d'une connexion électrique (422, 424) pour l'application à des bornes du stator de la deuxième machine d'une tension alternative, la connexion de la deuxième machine comprenant le transformateur tournant (422), le dispositif comprenant de plus deux liaisons cinématiques (441a, 441b) présentes entre des rotors de respectivement chacune des deux machines et une cinématique de synchronisation (442), la cinématique de synchronisation étant présente entre ces liaisons cinématiques et une liaison cinématique synchronisée (443) actionnant un unique système cible (450).

8. Dispositif selon la revendication 7, dans lequel la cinématique de synchronisation est placée au niveau d'un réducteur ou au niveau du système cible.

9. Dispositif selon la revendication 7, dans lequel plusieurs systèmes cibles synchronisés se substituent à l'unique système cible.

10. Dispositif selon l'une des revendications 1 à 9, dans lequel le transformateur tournant a un rapport de transformation déterminé permettant l'optimisation du convertisseur de contrôle et/ou de la machine.

11. Moteur de propulsion comportant des pales orientables, comprenant un dispositif selon l'une des revendications 1 à 10, le dispositif étant agencé pour actionner au moins une pale du moteur, ledit transformateur tournant transférant une puissance électrique d'une zone non tournante (A) du moteur à une zone tournante (B) du moteur.

12. Turboréacteur à soufflante non carénée, comprenant un moteur de propulsion selon la revendication 11.

## Patentansprüche

1. Betätigungs- oder Erzeugungsvorrichtung umfassend eine drehende elektrische Wechselstrommaschine (130; 230; 330a, 330b; 440a, 440b), die einen elektrischen Anschluss (122, 124; 222, 224; 322, 324; 422, 424) zum Anlegen an die Klemmen des Stators der Maschine einer Wechselspannung aufweist, die am Ausgang eines Steuerwandlers (110) erzeugt wird, dessen letztes Element vor dem elektrischen Anschluss ein Wandler ist, der eine Wechselspannung mit einer Frequenz erzeugt, die durch eine Steuerelektronik definiert wird, wobei der Anschluss einen drehenden Transformator (122; 222; 322; 422; 522) umfasst, **dadurch gekennzeichnet, dass** der ortsfeste Steuerwandler (110) dafür konfiguriert ist, die Maschine in vektorieller und/oder skalarer Steuerung durch den drehenden Transformator zu steuern, ohne auf ein aktives Stellglied zwischen diesem drehenden Transformator und der Maschine zurückzugreifen.

2. Vorrichtung nach Anspruch 1, wobei die Maschine (130; 230; 330a, 330b; 440a, 440b) eine Asynchronmaschine ist.

3. Vorrichtung nach Anspruch 1, wobei die Maschine (530) eine Synchronmaschine mit einem Anker (532) ist und deren Induktor (531) Stäbe oder eine Dämpfungsschaltung umfasst, die für einen asynchronen Anlauf ausgelegt ist.

4. Vorrichtung nach Anspruch 3, die weiter einen zweiten drehenden Transformator (523) zur Versorgung des Induktors mit Gleichstrom durch einen passiven drehenden Gleichrichter (528) umfasst.

5. Vorrichtung nach Anspruch 4, wobei der drehende Transformator (522), der den Anker (532) versorgt, aus einer Wechselstromquelle (510) gespeist wird, und der zweite drehende Transformator (523), der den Induktor (531) mit Gleichstrom versorgt, aus einer zweiten Wechselstromquelle (511) gespeist wird.

6. Vorrichtung nach Anspruch 1 oder 2, die weiter mindestens eine zweite drehende elektrische Wechselstrommaschine (330a, 330b) umfasst, die einen elektrischen Anschluss (322, 324) zum Anlegen an die Klemmen des Stators der zweite Maschine einer Wechselspannung aufweist, wobei der Anschluss der zweiten Maschine den drehenden Transformator (322) umfasst, wobei die Vorrichtung weiter zwei kinematische Verbindungen (340a, 340b) umfasst, die zwischen den Rotoren der Maschinen und den entsprechenden Zielsystemen vorhanden sind, um zwei verschiedene Zielsysteme (350a, 350b) durch die Rotoren jeder der beiden Maschinen zu betätigen.

7. Vorrichtung nach Anspruch 1 oder 2, die weiter mindestens eine zweite drehende elektrische Wechselstrommaschine (440a, 440b) umfasst, die einen elektrischen Anschluss (422, 424) zum Anlegen an die Klemmen des Stators der zweiten Maschine einer Wechselspannung aufweist, wobei der Anschluss der zweiten Maschine den drehenden Transformator (422) umfasst, wobei die Vorrichtung weiter zwei kinematische Verbindungen (441a, 441b), die zwischen den Rotoren an jeder der beiden Maschinen vorhanden sind, und eine Synchronisationskinematik (442) umfasst, wobei die Synchronisationskinematik zwischen diesen kinematischen Verbindungen und einer synchronisierten kinematischen Verbindung (443) vorhanden ist, die ein einziges Zielsystem (450) betätigt.

8. Vorrichtung nach Anspruch 7, wobei die Synchronisationskinematik an einem Getriebe oder an dem Zielsystem angeordnet ist.

9. Vorrichtung nach Anspruch 7, wobei eine Vielzahl von synchronisierten Zielsystemen das einzelne Zielsystem ersetzen.

10. Vorrichtung nach einem der Ansprüche 1 bis 9, wobei der drehende Transformator ein bestimmtes Übersetzungsverhältnis aufweist, das die Optimierung des Steuerwandlers und/oder der Maschine ermöglicht.

11. Antriebsmotor mit verstellbaren Schaufeln, umfassend eine Vorrichtung nach einem der Ansprüche 1 bis 10, wobei die Vorrichtung angeordnet ist, um zumindest eine Schaufel des Motors zu betätigen, wobei der drehende Transformator elektrische Leistung von einem nicht drehenden Bereich (A) des Motors zu einem drehenden Bereich (B) des Motors überträgt.

12. Turbo-Strahltriebwerk mit einem nicht stromlinienförmigen Gebläse umfassend einen Antriebsmotor nach Anspruch 11.

## Claims

1. Actuating or generating device comprising an AC rotary electric machine (130; 230; 330a, 330b; 440a, 440b) having an electrical connection (122, 124; 222, 224; 322, 324; 422, 424) for applying to terminals of the stator of the machine an alternative voltage delivered at the output of a control converter (110), the last element of which before the electrical connection being a converter delivering an alternative voltage at a frequency defined by an electronic of control, the connection comprising a rotary transformer (122; 222; 322; 422), the device being **characterized in that** the fixed control converter (110) is configured to servo-control the machine in vector and/or scalar control via the rotary transformer without resorting to an active actuator between said rotary transformer and the machine.

2. Device according to claim 1, wherein the machine (130; 230; 330a, 330b; 440a, 440b) is an asynchronous machine.

3. Device according to claim 1, wherein the machine (530) is a synchronous machine including an armature (532), an inductor (531) of which including a damper circuit or damper bars sized for an asynchronous start-up.

4. Device according to claim 3, further comprising a second rotary transformer (523) for DC supplying the inductor via a passive rotary rectifier (528).

5. Device according to claim 4, wherein the rotary transformer supplying the armature (532) is supplied by an AC source (510) and the second rotary transformer (523) DC supplying the inductor (531) is supplied by a second AC source (511).

6. Device according to claim 1 or 2, further including at least one second AC rotary electric machine (330a, 330b) having an electrical connection (322, 324) for applying an alternative voltage to terminals of the stator of the second machine, the connection of the second machine including the rotary transformer (322), the device further including two kinematic connections (340a, 340b) disposed between rotors of the machine and the corresponding target systems for actuating two different target systems (350a, 350b) by the rotors of each respective one of the two machines.

7. Device according to claim 1 or 2, further including at least one second AC rotary electric machine (440a, 440b) having an electrical connection (422, 424) for applying an alternative voltage to terminals of the stator of the second machine, the connection of the second machine including the rotary transformer (422), the device also including two kinematic connections (441a, 441b) disposed between rotors of each respective one of the two machines and a synchronization kinematic (442), the synchronization kinematic being disposed between these kinematic connections and a synchronized kinematic connection (443) actuating a single target system (450).

8. Device according to claim 7, wherein the synchronization kinematic is located near a reducer or near the target system.

9. Device according to claim 7, wherein several synchronized target systems replace the single target system.

10. Device according to any one of claims 1 to 9, wherein the rotary transformer has a determined transforming ratio for optimizing the control converter and/or the machine.

11. Propulsion engine having variable pitch blades, the engine including a device according to any one of claims 1 to 10, the device being arranged to actuate at least one blade of the engine, and wherein the rotary transformer transferring electrical power from a nonrotary zone (A) of the engine to a rotary zone (B) of the engine.

12. Unducted propfan comprising a propulsion engine according to claim 11.
